# FASCICULE DE BREVET EUROPEEN

(11) **EP 2 415 376 B1**
(45) Date de publication et mention de la délivrance du brevet: **19.03.2014**
(21) Numéro de dépôt: 11173839.9
(22) Date de dépôt: 13.07.2011
(51) Int. Cl.: A47J 43/25

(54) **Accessoires de découpe d'aliments à déversement amélioré et appareil électromenager comportant de tels accessoires**
Zubehörteile zum Zerschneiden von Lebensmitteln mit verbesserter Schüttung, und Elektrohaushaltsgerät, das mit diesen Zubehörteilen ausgestattet ist
Food cutting accessories with improved discharge and electrical appliance including such accessories

(30) Priorité: 06.08.2010 FR 1056481
(43) Date de publication de la demande: 08.02.2012
(73) Titulaire: SEB S.A., 69130 Ecully (FR)
(72) Inventeur: Rouyer, Philippe, 65290 Juillan (FR); Suberbie, Nicolas, 65290 Juillan (FR); Lafond, Jean-Marie, 65420 Ibos (FR)
(74) Mandataire: Blanchard, Eugène Gilles

(56) Documents cités:
- WO-A1-2004/012915
- FR-A1- 2 897 522

## Description

La présente invention concerne le domaine de la préparation des aliments et plus particulièrement le domaine de la découpe des aliments en morceaux.

L'invention propose dans ce cadre de nouveaux accessoires de découpe d'aliments pour un appareil électroménager et un appareil électroménager comportant de tels accessoires.

Dans le domaine de l'invention, on connaît depuis longtemps maintenant différents appareils permettant de râper et/ou émincer des aliments. Ces appareils, qui peuvent être à entraînement manuel et/ou motorisé, comportent traditionnellement un ou des outils de travail rotatifs cylindriques ou tronconiques comportant sur leur surface des moyens de découpes qui, lorsqu'ils sont entraînés en rotation au contact des aliments, permettent le découpage desdits aliments en morceaux.

L'invention s'intéresse plus particulièrement aux outils et appareils de découpe rotatifs d'aliments en dés offrant une faculté de service direct des aliments découpés en sortie d'outil ou d'appareil.

Un exemple d'appareil de découpe d'aliments en dés est décrit dans le document US 1,527,087. Cet appareil consiste en un tambour de découpe rotatif actionné par une manivelle manuelle. L'axe de rotation du tambour est monté sur un étrier dont une patte hélicoïdale s'étend à l'intérieur du tambour pour racler et éjecter les aliments découpés en dés qui tombent au travers d'orifices de découpe formés dans la paroi cylindrique du tambour à l'intérieur de celui-ci.

Un inconvénient de l'appareil décrit dans US 1,527,087 réside dans le caractère manuel de l'entrainement du tambour. Un autre inconvénient réside dans le danger d'utilisation de cet appareil pour l'utilisateur qui doit appuyer les aliments directement contre la surface coupante du tambour pour découper les aliments.

Un autre exemple d'appareil de découpe d'aliments en dés est décrit dans le document WO 2004/012915 A1. Cet appareil comporte une embase renfermant un moteur actionnant une transmission d'entraînement en rotation d'un outil de découpe monté dans le magasin d'un accessoire de travail solidaire de l'embase. L'outil de découpe est constitué de deux éléments de découpe montés coaxialement l'un par rapport à l'autre dans le magasin de l'accessoire de travail. Ces deux éléments comportent chacun des lames de découpe des aliments; un premier élément de découpe est mobile, entraîné en rotation par la transmission et le moteur autour d'un second élément fixe pour effectuer une première découpe des aliments en barres allongée; le second élément de découpe est lui fixe par rapport au magasin de l'accessoire de travail et au premier élément de découpe et sa où ses lames permettent la découpe en dés des barres découpées par le premier élément de découpe. Les aliments à découper sont poussés à l'aide d'un poussoir contre le premier élément de découpe dans un conduit d'alimentation. Les aliments découpés en dés sont évacués de l'intérieur du second élément de découpe par glissement sur une paroi inclinée de celui-ci.

Un inconvénient de l'appareil décrit dans ce document réside dans l'inefficacité de la pente d'éjection des aliments découpés vers l'extérieur de l'outil de découpe, qui provoque des problèmes de bourrage de l'outil et d'écrasement des aliments découpés. En effet, les aliments découpés ont tendance à adhérer sur la surface interne de l'outil de découpe et non à glisser sur cette surface et ce n'est en fait que par l'accumulation des aliments dans l'outil que ceux-ci sont progressivement poussés vers l'extérieur. Cette solution est insatisfaisante.

Aussi un objet de la présente invention est de proposer un élément de découpe d'aliments en dés qui procure une éjection rapide et totale des aliments découpés hors de l'outil de découpe.

Un autre objet de l'invention consiste à proposer un élément de découpe d'aliments en dés ou pseudo-bâtonnets qui soit simple et peu onéreux à réaliser et facile à nettoyer.

Un troisième objet de l'invention consiste à procurer également un élément de découpe qui puisse s'adapter le cas échéant à des outils ou éléments de découpe ou de tranchage existants pour permettre une découpe en dés ou en pseudo-bâtonnets d'aliments.

Ces différents objets sont atteints selon l'invention grâce à un élément statique de découpe d'aliments, présentant une forme permettant l'insertion et le blocage en position fixe à l'intérieur d'un élément rotatif de découpe d'aliments comportant des premiers moyens de découpe d'aliments et étant agencé dans un magasin de montage d'un outil de découpe d'un appareil électroménager de préparation d'aliments, ledit élément statique de découpe comportant un corps creux présentant une ouverture d'admission dans laquelle sont agencés des seconds moyens de découpe d'aliments, ainsi qu'une sortie d'évacuation. Selon l'invention, cet élément statique de découpe comporte une fenêtre traversante ménagée dans une partie inférieure du corps creux et au moins un bord longitudinal de la fenêtre traversante forme un organe de guidage des aliments découpés vers la sortie d'évacuation.

Ainsi, lorsque les aliments découpés tombent à l'intérieur de l'élément statique de découpe, ceux-ci tombent au niveau de la fenêtre traversante ouverte dans la paroi de l'élément statique de découpe à l'opposé des moyens de découpe et sont amenés, par effet d'entraînement par l'élément de découpe rotatif de l'outil de découpe mobile, dans la fenêtre traversante contre ledit bord longitudinal de la fenêtre qui par sa forme les guide vers la sortie d'évacuation dudit élément statique de découpe et de l'outil de découpe.

L'élément statique de découpe de l'invention permet de la sorte d'éviter tout phénomène de bourrage au fur et à mesure de la découpe des aliments dans la mesure où les éléments découpés, qui tombent à l'intérieur de l'élément statique de découpe après passage dans les moyens de découpe de ce dernier, arrivent sur une surface mobile qui est la surface interne d'un élément de découpe mobile en rotation dans la fenêtre traversante ménagées dans la paroi de l'élément statique de découpe. Ce faisant, les aliments sont entraînés contre une surface de guidage prévue en bordure de la fenêtre traversante, cette surface de guidage faisant office d'éjecteur vers la sortie de l'outil de découpe de l'appareil électroménager équipé. On évite ainsi toute stagnation des aliments découpés dans l'outil de découpe d'un appareil électroménager de préparation d'aliments.

De façon avantageuse, l'organe de guidage est constitué par une surface arrondie convexe reliant l'un des bords longitudinaux de ladite fenêtre traversante à la surface interne du corps creux. Ainsi, chaque bord longitudinal de la fenêtre forme en quelque sorte un rail de guidage des aliments découpés vers la sortie d'évacuation de l'élément statique de découpe, qui est aussi la sortie de l'outil de découpe mis en oeuvre.

Selon un mode de réalisation préféré, la fenêtre traversante est agencée au moins partiellement à l'opposé de l'ouverture d'admission.

Avantageusement selon l'invention, les seconds moyens de découpe comportent une série de lames s'étendant longitudinalement au travers de l'ouverture d'admission en direction de la sortie d'évacuation.

Avantageusement selon l'invention, l'élément statique de découpe proposé comporte au niveau de la sortie d'évacuation un bord périphérique comprenant une forme de déversement des aliments découpés dans le prolongement longitudinal de la fenêtre traversante.

De façon avantageuse toujours, l'élément statique de découpe selon l'invention comporte au niveau de la sortie d'évacuation un bord périphérique comprenant au moins un moyen d'accrochage.

Selon une forme de réalisation préférée, ledit bord périphérique forme une couronne, et ledit au moins un moyen d'accrochage comporte un verrou formé par une section de la couronne, ladite section étant pivotante par rapport au reste de la couronne suivant un axe (X-X') et comportant au moins un moyen de crochetage.

Avantageusement selon l'invention, ledit au moins un moyen d'accrochage est avantageusement élastiquement déformable et/ou encore de type à encliquetage.

La présente invention concerne également, conformément à un second objet, un outil de découpe d'aliments, comportant:
a) un élément rotatif de découpe présentant:
   - une première extrémité ouverte,
   - une seconde extrémité opposée à la première extrémité ouverte et munie de moyens d'accouplement à un dispositif d'entraînement en rotation, et
   - une paroi de révolution joignant les deux extrémités et comportant des premiers moyens de découpe d'aliments ;
b) un élément statique de découpe présentant une forme permettant l'insertion et le blocage en position fixe à l'intérieur de l'élément rotatif de découpe lorsque celui-ci est mu en rotation par ledit dispositif d'entraînement, ledit l'élément statique de découpe étant conforme à l'invention et tel que précédemment décrit.

Avantageusement selon l'invention, l'organe de guidage de l'élément statique de découpe est constitué par une surface relevée par rapport à la surface interne de la paroi de révolution de l'élément rotatif de découpe.

Avantageusement selon l'invention, les premiers moyens de découpe comportent au moins un organe de tranchage prévu pour découper au moins un morceau d'aliment, par exemple une tranche.

De façon préférée, les premiers moyens de découpe comportent au moins une série de lames sensiblement perpendiculaires aux génératrices de la paroi de révolution de l'élément rotatif de découpe.

Dans une forme de réalisation, la taille de la fenêtre traversante est supérieure à la taille des aliments découpés par les premiers moyens de découpe et les seconds moyens de découpe.

Un dernier objet de l'invention concerne enfin un appareil électroménager de préparation d'aliments, comportant:
- une base motrice formée d'un boîtier renfermant un moteur électrique d'entraînement et des moyens électriques de commande dudit moteur,
- un accessoire de travail solidaire de la base motrice et comportant un magasin de montage d'un outil de découpe,
- un outil de découpe d'aliments conforme à l'invention, comportant un élément rotatif de découpe et un élément statique de découpe,
- des moyens d'accouplement et d'entraînement en rotation par le moteur électrique de l'élément rotatif de découpe de l'outil de découpe par rapport à l'élément statique de découpe de l'outil de découpe dans le magasin.

Selon une caractéristique de cet appareil électroménager, les moyens d'accouplement et d'entraînement en rotation comportent un axe menant apte à coopérer par une première extrémité avec le moteur électrique renfermé dans le boîtier de la base motrice et portant à une seconde extrémité un organe mâle adapté pour engrener un orifice d'entraînement femelle formé dans la seconde extrémité de l'élément rotatif de découpe.

Enfin, dans une forme de réalisation particulière de l'appareil électroménager de l'invention, le magasin de l'accessoire de travail présente une extrémité ouverte par laquelle l'outil de découpe est inséré dans l'accessoire de travail, ladite extrémité ouverte comportant un rebord périphérique circulaire formant un épaulement d'accrochage du moyen d'accrochage de l'élément statique de découpe.

Diverses autres caractéristiques ressortent de la description faite ci-dessous en référence aux dessins annexés qui montrent, à titre d'exemples non limitatifs, des formes de réalisation de l'objet de l'invention.

Sur les figures annexées :
- la figure **1** représente en vue éclatée et en perspective un appareil électroménager de préparation d'aliments équipé d'un accessoire de travail recevant un outil de découpe d'aliments selon l'invention,
- la figure **2** représente en vue en coupe longitudinale un accessoire de travail recevant un outil de découpe d'aliments selon l'invention monté sur cet accessoire de travail,
- la figure **3** représente en vue perspective frontale l'outil de découpe d'aliment de l'invention dans un mode de réalisation préféré monté sur un accessoire de travail comme sur la figure **2****,**
- la figure **4** représente un premier élément de découpe constitutif de l'outil de découpe d'aliments de l'invention,
- la figure **5** représente un second élément de découpe constitutif de l'outil de découpe d'aliments de l'invention en coopération avec le premier élément de découpe de la figure **4****.**

La présente invention propose un élément statique de découpe d'aliments en dés ou pseudo-bâtonnets pour un appareil électroménager et un outil de découpe d'aliments comportant un tel élément de découpe statique permettant une évacuation améliorée, sans bourrage, des aliments découpés. L'invention propose également un appareil électroménager adapté pour recevoir et utiliser un tel outil de découpe d'aliment.

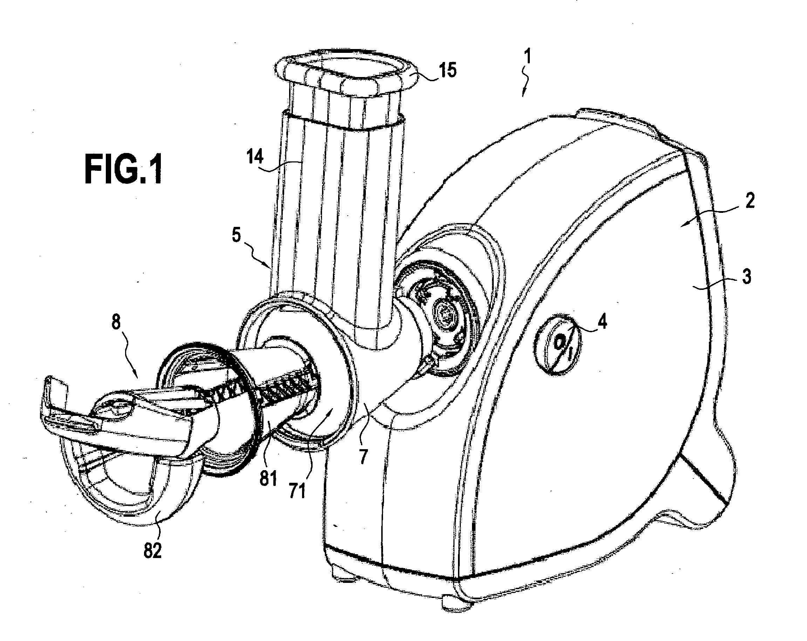

Comme cela ressort de la Figure **1****,** l'appareil électroménager **1** de l'invention est formé d'une base motrice **2** comprenant un boîtier **3** renfermant un moteur électrique et des circuits électroniques de commande du moteur (non représentés) et reliés à des organes de commande tels que des interrupteurs **4** localisés sur le boitier **3** pour permettre la mise en fonction et l'arrêt de l'appareil **1** par un utilisateur.

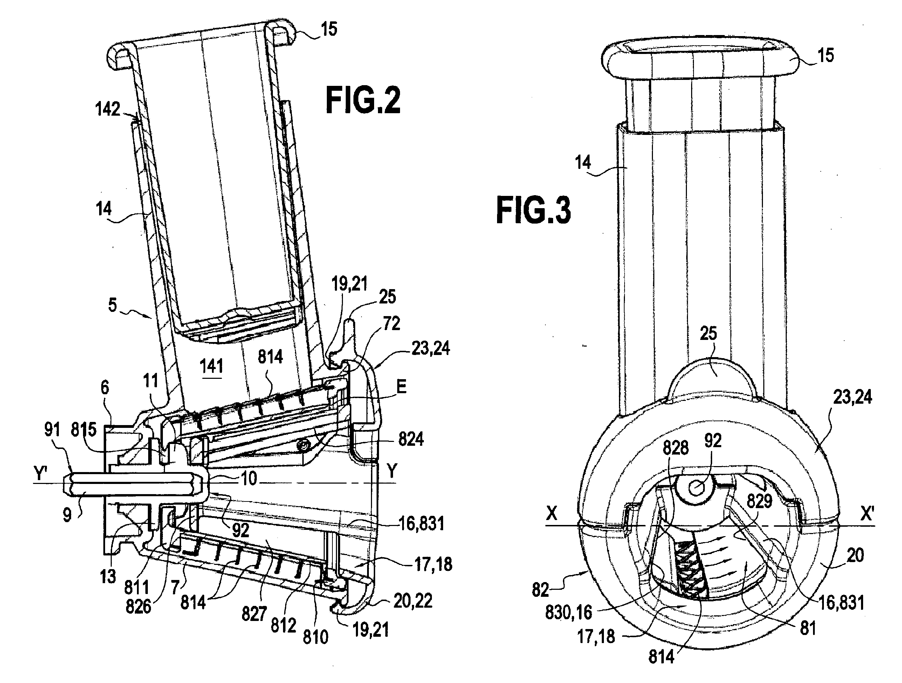

Sur le boîtier **3** est fixé un accessoire de travail **5,** représenté en détail sur les figures **2** et **3****,** de préférence amovible du boîtier **3** et apte à être fixé sur celui-ci par une bague de fixation **6,** notamment à vis ou à baïonnette. L'accessoire de travail **5** comporte un magasin **7** délimitant un logement interne **71** de dimensions et formes adaptées pour recevoir et permettre le montage d'un outil **8** de découpe d'aliments en dés, dans l'exemple représenté de forme tronconique, également conforme à la présente invention et décrit ci-après plus en détail.

L'accessoire de travail **5** comporte également une cheminée **14** d'introduction des aliments à découper. La cheminée **14** est solidaire du magasin **7.** La cheminée **14** est formée par un tronçon sensiblement tubulaire débouchant à ses deux extrémités qui forment respectivement un puits **141** de communication avec l'intérieur du magasin **7** et un orifice d'introduction **142** des aliments à découper dans la cheminée **14.** Cette cheminée reçoit un poussoir **15** destiné à pousser les aliments à découper dans la cheminée **14** depuis l'orifice d'introduction **142** vers le puits **141** pour permettre la découpe des aliments par l'outil de découpe **8** entraîné en rotation par un axe menant **9** et le moteur électrique à l'intérieur de la base motrice **2** de l'appareil **1** lorsque l'utilisateur actionne l'interrupteur de commande **4.**

L'outil de découpe **8** se compose, comme cela ressort des figures **1** à **5****,** d'un premier élément de découpe rotatif **81** et d'un second élément de découpe statique **82,** ce dernier faisant principalement l'objet de l'invention. Ces deux éléments de découpe **81,82** sont tous deux de forme tronconique, l'élément de découpe rotatif **81** étant adapté pour être inséré dans le logement interne **71** du magasin **7** de l'accessoire de travail 5, l'élément de découpe statique **82** étant adapté pour être inséré de manière coaxiale dans l'élément de découpe rotatif **81** comme schématisé sur les figures **1** et **2****.**

En variante, les éléments de découpe rotatif et/ou statique **81, 82** peuvent également être de forme cylindrique sans modifier ou altérer leur fonctionnalité propre ou celle de l'outil de découpe **8.**

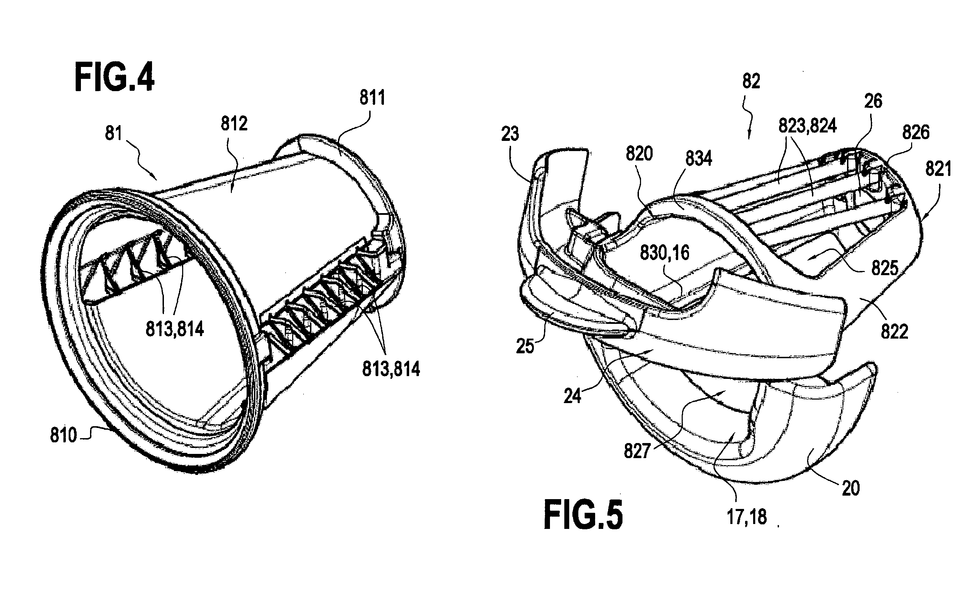

L'élément de découpe rotatif **81** est représenté à la figure **4****.** Celui-ci présente une première extrémité ouverte **810,** circulaire et située à l'avant et une seconde extrémité **811,** également circulaire et fermée, située à l'arrière de l'élément de découpe rotatif **81.** Les deux extrémités **810, 811** de l'élément de découpe rotatif **81** sont parallèles et concentriques l'une de l'autre et sont jointes par une paroi de révolution **812** en tronc de cône. La première extrémité ouverte **810** de l'élément de découpe rotatif 81 présente un diamètre supérieur à celui de la seconde extrémité **811** fermée.

En outre, l'élément de découpe rotatif **81** comporte dans sa paroi de révolution **812** des premiers moyens de découpe **813** constitués par au moins un organe de tranchage prévu pour découper un morceau ou tranche d'aliments, cet organe de tranchage comportant au moins une, et de préférence au moins deux, séries de lames de découpe **814** orientées sensiblement perpendiculairement aux génératrices de la paroi de révolution **812** de l'élément de découpe rotatif **81** pour effectuer une découpe d'aliment en barres lors de la rotation dudit élément de découpe rotatif **81** autour d'un axe passant par le centre de chacune de ses extrémités **810, 811** circulaires. Les deux séries de lames **814** sont préférentiellement situées en des positions diamétralement opposées de la paroi de révolution **812.** Les lames de découpes sont de préférence encore réalisées par des tôles métalliques montées dans des fenêtres rectangulaires ouvertes dans la paroi de révolution **812.**

L'élément de découpe rotatif **81** est avantageusement réalisé en matière plastique surmoulée sur les moyens de découpe **813.** A titre de variante, l'outil de découpe **8** pourrait notamment être réalisé en métal embouti.

L'élément de découpe rotatif **81** de l'outil de découpe **8** est destiné, de façon classique et comme cela ressort des figures **1** et **2****,** à être monté libre en rotation dans le magasin **7** de l'accessoire de travail **5** d'un appareil électroménager **1** de préparation d'aliments pour être entraîné en rotation lors du fonctionnement de l'appareil électroménager **1** par le moteur de ce dernier par le biais de l'axe menant **9,** représenté sur la figure **2****.** Cet axe menant **9** est monté libre en rotation dans la bague de fixation **6** de l'accessoire de travail **5,** à l'extrémité postérieure du magasin **7.** L'axe menant **9** coopère par une extrémité postérieure **91** avec le moteur électrique localisé dans la base motrice **2** et par une extrémité antérieure **92** avec l'outil de découpe **8,** et plus particulièrement l'élément de découpe rotatif **81** par sa seconde extrémité **811.** L'accouplement entre l'axe menant **9** et l'élément de découpe rotatif **81** est réalisé de façon avantageuse par l'intermédiaire d'un organe d'accouplement mâle **10** portant des dents **11** adaptées pour engrener un orifice d'accouplement femelle **815** de forme complémentaire de l'organe d'accouplement mâle **10** agencé dans la seconde extrémité fermée **811** du premier élément de découpe.

La coaxialité et le positionnement relatifs de l'axe menant **9** par rapport au magasin **7** et à l'outil de découpe **8** sont assurés par une rondelle de blocage **13** enfilée sur l'axe **9** par son extrémité postérieure **91** et venant buter contre le fond du magasin **7** recevant l'outil de découpe **8.**

L'élément de découpe statique **82** conforme à la présente invention est représenté individuellement sur la figure **5** et en position d'utilisation sur les figures **2** et **3** dans un mode de réalisation préférée non limitatif.

Cet élément de découpe statique **82** présente une première extrémité ouverte constituant une sortie d'évacuation **820** des aliments, située à l'avant et une seconde extrémité **821,** circulaire et fermée, située à l'arrière dudit élément de découpe statique **82.** Les extrémités **820, 821** de l'élément de découpe statique **82** sont parallèles et concentriques l'une de l'autre et sont jointes par une paroi de révolution définissant un corps creux **822** en tronc de cône. La sortie d'évacuation **820** présente un diamètre supérieur à celui de la seconde extrémité **821** fermée. Par ailleurs, les dimensions de l'élément de découpe statique **82** sont choisies pour permettre, comme cela ressort des figures **1** à **3****,** l'insertion de manière coaxiale de l'élément de découpe statique **82** dans l'élément de découpe rotatif **81** pour former l'outil de découpe **8** à l'intérieur du magasin **7** d'un accessoire de travail **5** d'un appareil électroménager **1** tel que celui représenté à la Figure **1****.** Les dimensions de l'élément de découpe statique **82** sont par ailleurs choisies pour permettre le ménagement, lors de l'insertion de l'élément de découpe statique **82** dans l'élément de découpe rotatif **81** d'un espace **E** entre la surface externe du corps creux **822** de l'élément de découpe statique **82** et la surface interne de la paroi de révolution **812** de l'élément de découpe rotatif **81.**

En outre, l'élément de découpe statique **82** comporte dans son corps creux **822** des moyens de découpe **823** constitués par une série de lames de découpe **824** orientées sensiblement parallèlement aux génératrices de la paroi de révolution du corps creux **822** pour effectuer une découpe en dés des aliments préalablement découpés en barres par l'élément de découpe rotatif **81** lors de sa rotation autour de l'élément de découpe statique **82** qui est lui destiné à rester fixe dans le magasin **7** de l'accessoire de travail **5,** comme il sera décrit par la suite.

Les lames de découpes **824** sont de préférence réalisées par des tôles métalliques montées dans une ouverture d'admission **825** sensiblement trapézoïdale ou rectangulaire ouverte dans le corps creux **822** et fixées en leurs extrémités par encastrement sur un rebord frontal de la sortie d'évacuation **820** de l'élément de découpe statique **82** et sur une paroi de fond **826** formant la seconde extrémité **821** fermée de l'élément de découpe. **82.** L'élément de découpe statique **82** comporte également dans la paroi de révolution du corps creux **822** une fenêtre traversante **827** localisée exactement à l'opposé et sensiblement de même forme et dimension que l'ouverture d'admission **825** comportant les lames de découpe **824** de l'élément de découpe statique **82.**

L'élément de découpe statique **82** de l'outil de découpe **8** est avantageusement réalisé en matière plastique surmoulée sur les moyens de découpe **824.**

De façon caractéristique, l'élément de découpe statique **82** comporte avantageusement au moins un organe de guidage **16** des aliments découpés en dés par les lames **824** vers la sortie d'évacuation **820,** qui forme une ouverture de déversement et de service des aliments découpés. De façon avantageuse selon l'invention, l'organe de guidage **16** des aliments découpés est formé par au moins un bord longitudinal **828** de la fenêtre traversante **827.**

De préférence, chaque bord longitudinal **828, 829** de la fenêtre **827** constitue un tel organe de guidage **16** des aliments découpés. Les bords longitudinaux **828, 829** de la fenêtre **827** forment chacun sur chaque côté longitudinal de ladite fenêtre une surface arrondie convexe **830, 831** relevée par rapport à la surface interne **832** de la paroi du corps creux **822** de l'élément de découpe statique **82.**

Selon des variantes de réalisation non représentées, les surfaces relevées **830, 831** peuvent également être de type en rampe droite.

Selon une autre caractéristique de l'invention, l'élément de découpe statique **82** comporte également au niveau de son ouverture d'admission **820** ouverte sur un bord périphérique **834,** une forme **17** de déversement des aliments découpés dans le prolongement longitudinal de la fenêtre traversante **827.** Cette forme **17** de déversement est par exemple réalisée par un décrochement **18** délimité par les extrémités des bords longitudinaux **828, 829** formant les organes de guidage **16** des aliments.

L'élément de découpe statique **82** de l'outil de découpe **8** est destiné à rester fixe par rapport au magasin **7** de l'accessoire de travail **5** au cours de l'utilisation de l'outil de découpe **8.** A cette fin, l'élément de découpe statique **82** comporte avantageusement au niveau de son ouverture d'admission **820** au moins un moyen d'accrochage **19** formé autour ou dans le prolongement du bord périphérique **834** de l'ouverture d'admission **820.** De façon préférée, ce moyen d'accrochage **19** est un moyen élastiquement déformable et/ou de type à encliquetage pour permettre lors du montage de l'outil de découpe **8** dans l'accessoire de travail **5** de l'appareil électroménager **1** un blocage de l'élément de découpe statique **82** sur le rebord **72** du magasin **7** de l'accessoire de travail **5,** en forme d'épaulement.

Selon une forme de réalisation préférée représentée sur les figures, l'élément de découpe statique **82** forme sur le bord périphérique **834** dans le prolongement de la paroi de révolution du corps creux **822** et de l'ouverture d'admission **820** une couronne **20** adaptée pour réaliser le recouvrement de l'extrémité ouverte **810** de l'élément de découpe rotatif **81** lorsque les deux éléments de découpe **81, 82** sont assemblés dans le magasin **7** de l'accessoire de travail **5,** comme représenté sur la figure **2** en particulier. De plus, cette couronne **20** comporte également ou réalise avantageusement le moyen d'accrochage **19** de l'élément de découpe statique **82,** cette couronne **20** étant configurée pour recouvrir le rebord **72** du magasin **7** de l'accessoire de travail **5** et permettre, par le biais d'un crochet **21** formé sur le rebord périphérique **22** interne de ladite couronne **20,** ce crochet **21** réalisant le moyen d'accrochage **19** et permettant la liaison par déformation élàstique et encliquetage de la couronne **20** sur le rebord **72** du magasin et ainsi l'accrochage en position fixe de l'élément de découpe statique **82** sur l'accessoire de travail **5** tout en maintenant également dans le magasin **7** dudit accessoire de travail **5** le premier élément de découpe **81.**

De façon avantageuse encore, afin de faciliter les opérations d'accrochage et de décrochage de l'élément de découpe statique **82** sur l'accessoire de travail, le moyen d'accrochage **19** de l'élément de découpe statique **82** comporte un verrou **23.** Ce verrou **23** est avantageusement formé par une section **24** de la couronne **20** du second élément de découpe **82,** ladite section étant pivotante par rapport au reste de la couronne **18** suivant un axe X-X' perpendiculaire à un axe longitudinal Y-Y' commun des éléments de découpe **81, 82** lorsque ces derniers sont montés dans le magasin **7** de l'accessoire de travail **5,** comme représenté sur la figure **2****.** Ce verrou **23** comporte une patte **25** de fermeture et ouverture manuelle et comportant un moyen de crochetage constitué par une section du rebord en crochet **21** de la couronne **20.**

Enfin, afin de maintenir la coaxialité des deux éléments de découpe **81, 82** de l'outil de découpe **8** en fonctionnement lorsqu'ils sont assemblés dans le magasin **7** de l'accessoire de travail **5,** l'élément de découpe statique **82** comporte dans sa paroi de fond **826** à sa seconde extrémité **821** un orifice circulaire **26** destiné à recevoir la tête **92** de l'axe menant **9** d'entraînement de l'élément de découpe rotatif **81,** cette tête étant libre en rotation dans l'orifice **26.**

L'utilisation de l'outil de découpe **8** de la présente invention, et par continuité de l'appareil électroménager **1** de l'invention destiné à recevoir cet outil de découpe **8,** sont particulièrement simples. Il suffit dans un premier temps d'accrocher l'accessoire de travail **5** à la base motrice **2** par sa bague de fixation **6** puis de monter l'outil de découpe **8** de l'invention dans le magasin **7** de l'accessoire de travail **5.**

Pour ce faire, on introduit tout d'abord l'élément de découpe rotatif **81** dans le logement **71** du magasin **7** jusqu'à ce que l'organe mâle d'accouplement **10** de l'axe menant **9** pénètre dans la forme d'accouplement femelle **815** au fond de la second extrémité **811** de l'élément de découpe rotatif **81.** Ensuite, on introduit l'élément de découpe statique **82** dans l'élément de découpe rotatif **81** jusqu'à ce que la tête **92** de l'axe menant **9** s'étende au travers de l'orifice **26** au fond de l'élément de découpe statique **82** et que la couronne **20** soit accrochée sur le rebord **72** du magasin **7** par son crochet **21.** Il suffit pour finir de verrouiller l'assemblage en fermant le verrou **23** sur la partie supérieure du rebord **72** du magasin, comme représenté sur les figures **2** et **3****.** L'appareil électroménager **1** et l'outil de découpe **8** sont alors prêts à être utilisés.

Lorsque l'on veut préparer un plat à base de légumes découpés en dés tels que des betteraves ou des courgettes par exemple, il suffit d'allumer l'appareil **1** en appuyant sur l'interrupteur **4** pour initier l'entraînement en rotation de l'élément de découpe rotatif **81** dans le magasin **7** de l'accessoire de travail. Ensuite, on introduit les aliments à découper dans la cheminée **14** de l'accessoire de travail **5** et on les pousse à l'aide du poussoir **15** contre les lames **814** en rotation de l'élément de découpe **81** qui effectue une première découpe des aliments en barres. Du fait de la rotation de l'élément de découpe rotatif **81,** les aliments découpés une première fois en barres sont simultanément à la rotation pressés contre les- lames **824** de l'élément de découpe statique **82,** ce qui provoque la découpe des barres d'aliments en cubes ou dés. Les aliments découpés en dés tombent alors par gravité à l'intérieur de l'élément de découpe statique **82** dans la fenêtre traversante **827** prévue dans la paroi **822** de l'élément de découpe statique **82,** fenêtre dans laquelle circule en rotation la surface interne de l'élément de découpe rotatif **81,** comme représenté sur la figure **3****.** Les aliments découpés en dés ou cubes sont alors entraînés du fait de la rotation du premier élément de découpe dans la fenêtre **827** et projetés contre les organes de guidage **14** sur les bords longitudinaux **830, 831** de la fenêtre **827,** lesquels organes de guidage mènent les aliments découpés vers la forme de déversement 15 au niveau de la sortie d'évacuation **820** et de la couronne **18** de l'élément de découpe statique **82.** Les aliments découpés peuvent ainsi directement être servis dans une assiette ou un récipient de service.

Il convient de noter que les premiers moyens de découpe **813** pourraient ne comporter qu'un organe de tranchage s'étendant à distance de la paroi de révolution **812** de l'élément rotatif de découpe **81,** les seconds moyens de découpe **823** transformeraient alors ces tranches en bâtonnets ; en alternative, les seconds moyens de découpe **823** pourraient également être formés par une grille pour obtenir des cubes.

Une fois la découpe d'aliments terminée, il suffit de stopper l'appareil électroménager **1** en appuyant une nouvelle fois sur son interrupteur **4** pour stopper le moteur dans la base motrice **2** et la rotation de l'élément de découpe rotatif **81,** puis de démonter les éléments de découpe rotatifs et statiques **81, 82** de l'outil de découpe **8** et l'accessoire de travail **5** dans l'ordre inverse de leur montage pour procéder à leur nettoyage.

## Revendications

1. Elément statique **(82)** de découpe d'aliments, présentant une forme permettant l'insertion et le blocage en position fixe à l'intérieur d'un
élément rotatif de découpe **(81)** d'aliments comportant des premiers moyens de découpe **(813)** d'aliments et étant agencé dans un magasin **(7)** de montage d'un outil de découpe **(8)** d'un appareil électroménager (1) de préparation d'aliments, ledit élément statique de découpe **(82)** comportant un corps creux **(822)** présentant une ouverture d'admission **(825)** dans laquelle sont agencés des seconds moyens de découpe **(823)** d'aliments, ainsi qu'une sortie d'évacuation **(820), caractérisé en ce qu'**une fenêtre traversante **(827)** est ménagée dans une partie inférieure du corps creux **(822),** et **en ce qu'**au moins un bord longitudinal **(828, 829)** de ladite fenêtre traversante **(827)** forme un organe de guidage **(14)** des aliments découpés vers la sortie d'évacuation **(820).**

2. Elément statique de découpe **(82)** d'aliments selon la revendication 1, **caractérisé en ce que** l'organe de guidage **(14)** est constitué par une surface arrondie convexe reliant l'un des bords longitudinaux **(828, 829)** de ladite fenêtre traversante **(827)** à la surface interne du corps creux **(822).**

3. Elément statique de découpe **(82)** d'aliments selon l'une des revendications 1 ou 2, **caractérisé en ce que** la fenêtre traversante **(827)** est agencée au moins partiellement à l'opposé de l'ouverture d'admission **(825).**

4. Elément statique de découpe **(82)** d'aliments selon l'une des revendications 1 à 3, **caractérisé en ce que** les seconds moyens de découpe **(823)** comportent une série de lames **(824)** s'étendant longitudinalement au travers de l'ouverture d'admission **(825)** en direction de la sortie d'évacuation **(820).**

5. Elément statique de découpe **(82)** d'aliments selon l'une des revendications 1 à 4, **caractérisé en ce qu'**il comporte au niveau de la sortie d'évacuation **(820)** un bord périphérique comprenant une forme de déversement **(17)** des aliments découpés dans le prolongement longitudinal de la fenêtre traversante **(827).**

6. Elément statique de découpe **(82)** d'aliments selon l'une des revendications 1 à 5, **caractérisé en ce qu'**il comporte au niveau de la sortie d'évacuation **(820)** un bord périphérique comprenant au moins un moyen d'accrochage **(19).**

7. Elément statique de découpe **(82)** d'aliments selon l'une des revendications 5 ou 6, **caractérisé en ce que** le bord périphérique forme une couronne **(20).**

8. Elément statique de découpe **(82)** d'aliments selon la revendication 6, **caractérisé en ce que** le bord périphérique forme une couronne **(20)** et **en ce que** ledit au moins un moyen d'accrochage **(19)** comporte un verrou **(23)** formé par une section **(24)** de la couronne **(20),** ladite section **(24)** étant pivotante par rapport au reste de la couronne **(20)** suivant un axe (X-X') et comportant un moyen de crochetage **(21).**

9. Elément statique de découpe **(82)** d'aliments selon l'une des revendications 6 ou 8, **caractérisé en ce que** ledit au moins un moyen d'accrochage **(19)** est élastiquement déformable.

10. Elément statique de découpe **(82)** d'aliments selon l'une des revendications 6, 8 ou 9, **caractérisé en ce que** ledit au moins un moyen d'accrochage **(19)** est de type à encliquetage.

11. Outil de découpe **(8)** d'aliments, comportant :
a) un élément de découpe rotatif **(81)** présentant :
- une première extrémité ouverte **(810),**
- une seconde extrémité **(811)** opposée à la première extrémité ouverte **(810)** et munie de moyens d'accouplement **(815)** à un dispositif d'entraînement en rotation, et
- une paroi de révolution **(812)** joignant les deux extrémités et comportant des premiers moyens de découpe **(813)** d'aliments;
b) un élément statique de découpe **(82)** présentant une forme permettant l'insertion et le blocage en position fixe à l'intérieur de l'élément rotatif de découpe **(81),** lorsque celui-ci est mu en rotation par ledit dispositif d'entraînement,
**caractérisé en ce que** l'élément statique de découpe **(82)** est conforme à l'une des revendications 1 à 10.

12. Outil de découpe **(8)** d'aliments selon la revendication 11, **caractérisé en ce que** l'organe de guidage **(14)** de l'élément statique de découpe **(82)** est constitué par une surface relevée par rapport à la surface interne de la paroi de révolution **(812)** de l'élément rotatif de découpe **(81).**

13. Outil de découpe **(8)** d'aliments selon l'une des revendications 11 ou 12, **caractérisé en ce que** les premiers moyens de découpe **(813)** comportent au moins un organe de tranchage.

14. Outil de découpe **(8)** d'aliments selon la revendication 13, **caractérisé en ce que** les premiers moyens de découpe **(813)** comportent au moins une série de lames **(814)** sensiblement perpendiculaires aux génératrices de la paroi de révolution **(812)** de l'élément rotatif de découpe **(81).**

15. Outil de découpe **(8)** d'aliments selon l'une des revendications 11 à 14, **caractérisé en ce que** la taille de la fenêtre traversante **(827)** est supérieure à la taille des aliments découpés par les premiers moyens de découpe **(813)** et les seconds moyens de découpe **(823).**

16. Appareil électroménager **(1)** de préparation d'aliments, comportant :
- une base motrice **(2)** formée d'un boîtier **(3)** renfermant un moteur électrique d'entraînement et des moyens électriques de commande dudit moteur,
- un accessoire de travail **(5)** solidaire de la base motrice **(2)** et comportant un magasin **(7)** de montage d'un outil de découpe,
- un outil de découpe **(8)** d'aliments comportant un élément rotatif de découpe **(81)** et un élément statique de découpe **(82),**
- des moyens **(9, 10)** d'accouplement et d'entraînement en rotation par le moteur électrique de l'élément rotatif de découpe **(81)** de l'outil de découpe **(8)** par rapport à l'élément statique de découpe **(82)** de l'outil de découpe **(8)** dans le magasin **(7),**
**caractérisé en ce que** l'outil de découpe **(8)** est conforme à l'une des revendications 11 à 15.

17. Appareil électroménager de préparation d'aliments selon la revendication 16, **caractérisé en ce que** les moyens **(9, 10)** d'accouplement et d'entraînement en rotation comportent un axe menant **(9)** apte à coopérer par une première extrémité **(91)** avec le moteur électrique renfermé dans le boîtier **(3)** de la base motrice **(2)** et portant à une seconde extrémité un organe mâle (10) adapté pour engrener un orifice d'entraînement femelle **(815)** formé dans la seconde extrémité **(811)** de l'élément rotatif de découpe **(81).**

18. Appareil électroménager de préparation d'aliments selon l'une des revendications 16 ou 17 comportant un élément statique de découpe **(82)** selon l'une dés revendications 6, 8, 9 ou 10, **caractérisé en ce que** le magasin **(7)** de l'accessoire de travail **(5)** présente une extrémité ouverte **(71)** par laquelle l'outil de découpe **(8)** est inséré dans l'accessoire de travail **(5),** ladite extrémité ouverte **(71)** comportant un rebord périphérique **(72)** circulaire formant un épaulement d'accrochage du moyen d'accrochage **(17)** de l'élément statique de découpe **(82).**

## Patentansprüche

1. Statisches Element (82) zum Schneiden von Lebensmitteln, das eine Form aufweist, die das Einfügen und das Festlegen in fester Position innerhalb eines umlaufenden Elements zum Schneiden (81) von Lebensmitteln ermöglicht, das erste Mittel zum Schneiden (813) von Lebensmitteln umfasst und in einem Magazin (7) zum Anbringen eines Schneidewerkzeugs (8) eines elektrischen Haushaltsgerätes (1) zur Zubereitung von Lebensmitteln angeordnet ist, wobei das statische Schneideelement (82) einen Hohlkörper (822) umfasst, welcher eine Zuführöffnung (825), in der zweite Mittel zum Schneiden (823) von Lebensmitteln angeordnet sind, sowie einen Abführausgang (820) aufweist, **dadurch gekennzeichnet, dass** ein Durchgangsfenster (827) in einem unteren Teil des Hohlkörpers (822) ausgebildet ist und dass wenigstens ein Längsrand (828, 829) des Durchgangsfensters (827) ein Organ zum Führen (16) der geschnittenen Lebensmittel zu dem Abführausgang (820) bildet.

2. Statisches Element zum Schneiden (82) von Lebensmitteln nach Anspruch 1, **dadurch gekennzeichnet, dass** das Führungsorgan (16) durch eine abgerundete, konvexe Fläche gebildet ist, die den einen der Längsränder (828, 829) des Durchgangsfensters (827) mit der Innenfläche des Hohlkörpers (822) verbindet.

3. Statisches Element zum Schneiden (82) von Lebensmitteln nach einem der Ansprüche 1 oder 2, **dadurch gekennzeichnet, dass** das Durchgangsfenster (827) wenigstens teilweise gegenüber der Zuführöffnung (825) angeordnet ist.

4. Statisches Element zum Schneiden (82) von Lebensmitteln nach einem der Ansprüche 1 bis 3, **dadurch gekennzeichnet, dass** die zweiten Schneidemittel (823) eine Reihe von Klingen (824) umfassen, die längs durch die Zuführöffnung (825) hindurch in Richtung des Abführausgangs (820) verlaufen.

5. Statisches Element zum Schneiden (82) von Lebensmitteln nach einem der Ansprüche 1 bis 4, **dadurch gekennzeichnet, dass** es im Bereich des Abführausgangs (820) einen Umfangsrand umfasst, der eine Form zum Ausschütten (17) der geschnittenen Lebensmittel in der Längsfortsetzung des Durchgangsfensters (827) aufweist.

6. Statisches Element zum Schneiden (82) von Lebensmitteln nach einem der Ansprüche 1 bis 5, **dadurch gekennzeichnet, dass** es im Bereich des Abführausgangs (820) einen Umfangsrand mit wenigstens einem Einhängmittel (19) umfasst.

7. Statisches Element zum Schneiden (82) von Lebensmitteln nach einem der Ansprüche 5 oder 6, **dadurch gekennzeichnet, dass** der Umfangsrand einen Kranz (20) bildet.

8. Statisches Element zum Schneiden (82) von Lebensmitteln nach Anspruch 6, **dadurch gekennzeichnet, dass** der Umfangsrand einen Kranz (20) bildet und dass das wenigstens eine Einhängmittel (19) einen durch einen Abschnitt (24) des Kranzes (20) gebildeten Riegel (23) umfasst, wobei der Abschnitt (24) gegenüber dem Rest des Kranzes (20) um eine Achse (X-X') schwenkbar ist und ein Anhakmittel (21) umfasst.

9. Statisches Element zum Schneiden (82) von Lebensmitteln nach einem der Ansprüche 6 oder 8, **dadurch gekennzeichnet, dass** das wenigstens eine Einhängmittel (19) elastisch verformbar ist.

10. Statisches Element zum Schneiden (82) von Lebensmitteln nach einem der Ansprüche 6, 8 oder 9, **dadurch gekennzeichnet, dass** das wenigstens eine Einhängmittel (19) vom einrastenden Typ ist.

11. Werkzeug zum Schneiden (8) von Lebensmitteln, umfassend:
a) ein umlaufendes Schneideelement (81), das aufweist:
- ein erstes offenes Ende (810),
- ein zweites Ende (811), das dem ersten offenen Ende (810) gegenüberliegt und mit Mitteln zum Ankuppeln (815) an eine Drehantriebsvorrichtung versehen ist, und
- eine Rotationswand (812), welche die beiden Enden verbindet und erste Mittel zum Schneiden (813) von Lebensmitteln umfasst;
b) ein statisches Schneideelement (82), das eine Form aufweist, die das Einfügen und das Festlegen in fester Position innerhalb des umlaufenden Schneideelements (81) ermöglicht, wenn dieses durch die Antriebsvorrichtung drehbewegt wird,
**dadurch gekennzeichnet, dass** das statische Schneideelement (82) gemäß einem der Ansprüche 1 bis 10 ist.

12. Werkzeug zum Schneiden (8) von Lebensmitteln nach Anspruch 11, **dadurch gekennzeichnet, dass** das Führungsorgan (16) des statischen Schneideelements (82) durch eine gegenüber der Innenfläche der Rotationswand (812) des umlaufenden Schneideelements (81) erhöhte Fläche gebildet ist.

13. Werkzeug zum Schneiden (8) von Lebensmitteln nach einem der Ansprüche 11 oder 12, **dadurch gekennzeichnet, dass** die ersten Schneidemittel (813) wenigstens ein Durchschneideorgan umfassen.

14. Werkzeug zum Schneiden (8) von Lebensmitteln nach Anspruch 13, **dadurch gekennzeichnet, dass** die ersten Schneidemittel (813) wenigstens eine Reihe von Klingen (814) umfassen, die zu den Mantellinien der Rotationswand (812) des umlaufenden Schneideelements (81) im Wesentlichen senkrecht verlaufen.

15. Werkzeug zum Schneiden (8) von Lebensmitteln nach einem der Ansprüche 11 bis 14, **dadurch gekennzeichnet, dass** die Größe des Durchgangsfensters (827) größer ist als die Größe der durch die ersten Schneidemittel (813) und die zweiten Schneidemittel (823) geschnittenen Lebensmittel.

16. Elektrisches Haushaltsgerät (1) zur Zubereitung von Lebensmitteln, umfassend:
- eine Antriebsbasis (2), die von einem Gehäuse (3), welches einen elektrischen Antriebsmotor und elektrische Mittel zur Steuerung des Motors enthält, gebildet ist,
- ein Arbeitszubehör (5), das mit der Antriebsbasis (2) fest verbunden ist und ein Magazin (7) zum Anbringen eines Schneidewerkzeugs umfasst,
- ein Werkzeug zum Schneiden (8) von Lebensmitteln, das ein umlaufendes Schneideelement (81) und ein statisches Schneideelement (82) umfasst,
- Mittel (9, 10) zum Ankuppeln und zum Drehantreiben durch den Elektromotor des umlaufenden Schneideelements (81) des Schneidewerkzeugs (8) gegenüber dem statischen Schneideelement (82) des Schneidewerkzeugs (8) in dem Magazin (7),
**dadurch gekennzeichnet, dass** das Schneidewerkzeug (8) gemäß einem der Ansprüche 11 bis 15 ist.

17. Elektrisches Haushaltsgerät zur Zubereitung von Lebensmitteln nach Anspruch 16, **dadurch gekennzeichnet, dass** die Ankuppel- und Drehantriebsmittel (9, 10) eine Antriebsachse (9) umfassen, die geeignet ist, über ein erstes Ende (91) mit dem in dem Gehäuse (3) der Antriebsbasis (2) enthaltenen Elektromotor zusammenzuwirken, und die an einem zweiten Ende ein Eingreiforgan (10) trägt, welches dazu ausgelegt ist, in eine aufnehmende Antriebsöffnung (815), die in dem zweiten Ende (811) des umlaufenden Schneideelements (81) ausgebildet ist, einzugreifen.

18. Elektrisches Haushaltsgerät zur Zubereitung von Lebensmitteln nach einem der Ansprüche 16 oder 17, umfassend ein statisches Schneideelement (82) nach einem der Ansprüche 6, 8, 9 oder 10, **dadurch gekennzeichnet, dass** das Magazin (7) des Arbeitszubehörs (5) ein offenes Ende (71) aufweist, über das das Schneidewerkzeug (8) in das Arbeitszubehör (5) eingefügt wird, wobei das offene Ende (71) einen kreisförmigen Umfangsrand (72) umfasst, der eine Schulter zum Einhängen des Einhängmittels (19) des statischen Schneideelements (82) bildet.

## Claims

1. Static food cutting element **(82)** configured to be inserted and secured in a stationary position inside of a rotary food cutting element **(81)** including first food cutting means **(813)** and arranged in an assembly magazine **(7)** of a cutting tool **(8)** of an electric food processing appliance **(1),** said static cutting element **(82)** including a hollow body **(822)** having an inlet opening **(825)** in which are arranged second food cutting means **(823),** and also a discharge outlet (820), **characterized in that** a through-window **(827)** is formed in a lower part of the hollow body **(822),** and further **characterized in that** at least one lengthwise edge **(828, 829)** of said through-window **(827)** forms a unit **(14)** for guiding the cut foods towards the discharge outlet **(820).**

2. Static food cutting element **(82)** as in claim 1, **characterized in that** the guiding unit **(14)** consists of a convex, rounded surface connecting one of the lengthwise edges **(828, 829)** of said through-window **(827)** to the inner surface of the hollow body **(822).**

3. Static food cutting element **(82)** as in claim 1 or claim 2, **characterized in that** the through-window **(827)** is arranged at least partially opposite the inlet opening **(825).**

4. Static food cutting element **(82)** as in any one of claims 1 through 3, **characterized in that** the second cutting means **(823)** include a set of blades **(824)** extending longitudinally through the inlet opening **(825)** towards the discharge outlet **(820).**

5. Static food cutting element **(82)** as in any one of claims 1 through 4, **characterized in that** it includes, in the vicinity of the discharge outlet **(820),** a peripheral edge including an assembly **(17)** for discharging cut foods in the longitudinal extension of the through-window **(827).**

6. Static food cutting element **(82)** as in any one of claims 1 through 5, **characterized in that** it includes, in the vicinity of the discharge outlet **(820),** a peripheral edge including at least one hooking means **(19).**

7. Static food cutting element **(82)** as in claim 5 or claim 6, **characterized in that** the peripheral edge forms a rim **(20).**

8. Static food cutting element **(82)** as in claim 6, **characterized in that** the peripheral edge forms a rim **(20)** and further **characterized in that** at least one said hooking means **(19)** includes a lock **(23)** formed by a section **(24)** of the rim **(20),** said section **(24)** being pivotable in relation to the rest of the rim **(20)** along an axis (X-X') and including a linking means **(21).**

9. Static food cutting element **(82)** as in claim 6 or claim 8, **characterized in that** at least one said hooking means **(19)** is elastically deformable.

10. Static food cutting element **(82)** as in any one of claims 6, 8, or 9, **characterized in that** at least one said hooking means **(19)** is of the snap-in variety.

11. Food cutting tool **(8)** including:
a) a rotary cutting element **(81)** having:
- a first, open end **(810),**
- a second end **(811)** opposite the first, open end **(810)** and equipped with means **(815)** for coupling to a rotational drive mechanism, and
- a revolving wall **(812)** joining the two ends and including first food cutting means **(813);**
b) a static cutting element **(82)** configured to be inserted and secured in a stationary position inside the rotary cutting element **(81)** when the latter is driven in rotation by said drive mechanism, **characterized in that** the static cutting element **(82)** is configured according to any one of claims 1 through 10.

12. Food cutting tool **(8)** as in claim 11, **characterized in that** the guiding unit **(14)** of the static cutting element **(82)** consists of a surface that is raised in relation to the inner surface of the revolving wall **(812)** of the rotary cutting element **(81).**

13. Food cutting tool **(8)** as in claim 11 or claim 12, **characterized in that** the first cutting means **(813)** include at least one slicing unit.

14. Food cutting tool **(8)** as in claim 13, **characterized in that** the first cutting means **(813)** include at least one set of blades **(814)** substantially perpendicular to the lines of the revolving wall **(812)** of the rotary cutting element **(81).**

15. Food cutting tool **(8)** as in any one of claims 11 through 14, **characterized in that** the size of the through-window **(827)** is greater than the size of the foods cut by the first cutting means **(813)** and the second cutting means **(823).**

16. Electric food processing appliance **(1)** including:
- a drive base **(2)** formed from a housing **(3)** enclosing an electric drive motor and electric control means for said motor,
- a working attachment **(5)** integrally formed with the drive base **(2)** and including a magazine **(7)** for installing a cutting tool,
- a food cutting tool **(8)** including a rotary cutting element **(81)** and a static cutting element **(82),**
- means **(9, 10)** for coupling and for driving, by means of the electric motor, the rotary cutting element **(81)** of the cutting tool **(8)** in rotation in relation to the static cutting element **(82)** of the cutting tool **(8)** in the magazine **(7),**
**characterized in that** the cutting tool **(8)** is configured according to any one of claims 11 through 15.

17. Electric food processing appliance as in claim 16, **characterized in that** the means **(9, 10)** for coupling and driving in rotation include a drive axis **(9)** designed to cooperate, by means of a first end **(91),** with the electric motor enclosed in the housing **(3)** of the drive base **(2)** and bearing, on a second end, a male unit **(10)** adapted for meshing with a female drive aperture **(815)** formed in the second end **(811)** of the rotary cutting element **(81).**

18. Electric food processing appliance as in claim 16 or claim 17 including a static cutting element **(82)** as in any one of claims 6, 8, 9, or 10, **characterized in that** the magazine **(7)** of the working attachment **(5)** has an open end **(71)** via which the cutting tool **(8)** is inserted into the working attachment **(5),** said open end **(71)** including a circular peripheral flange **(72)** forming a shoulder for the hooking engagement of the hooking means **(17)** of the static cutting element **(82).**
